# EUROPEAN PATENT SPECIFICATION

(11) **EP 4 345 294 B1**
(45) Date of publication and mention of the grant of the patent: **22.07.2026**
(21) Application number: 23382630.4
(22) Date of filing: 21.06.2023
(51) Int. Cl.: F03D 13/20, E04H 12/08, E04H 12/12, E04H 12/16, E04H 12/34

(54) **CONCRETE SEGMENT OF A SECTION OF A TOWER OF A WIND TURBINE AND ADAPTER OF A TOWER OF A WIND TURBINE TOWER**
BETONSEGMENT EINES TURMABSCHNITTS EINER WINDENERGIEANLAGE UND ADAPTER EINES TURMS EINES WINDENERGIEANLAGETURMS
SEGMENT EN BÉTON D'UNE SECTION D'UNE TOUR D'UNE ÉOLIENNE ET ADAPTATEUR D'UNE TOUR D'UNE TOUR D'ÉOLIENNE

(30) Priority: 27.09.2022 EP 22382885; 27.09.2022 EP 22382884
(43) Date of publication of application: 03.04.2024
(73) Proprietor: Nordex Energy Spain, S.A.U., 31395 Barasoain (Navarra) (ES); Nordex Energy SE & Co. KG, 22419 Hamburg (DE)
(72) Inventor: Rubio Guillen, Iñigo, Barasoain (ES); Ongay, Jon, Barasoain (ES); Garduño, Aitor, Barasoain (ES); Gonzalez, Miguel, Barasoain (ES); García, Iván, Barasoain (ES); Arlabán, Teresa, Barasoain (ES)
(74) Representative: Pons IP

(56) References cited:
- EP-A1- 3 744 928
- WO-A1-2019/193388
- CN-A- 104 121 155
- CN-A- 106 438 215

## Description

### OBJECT OF THE INVENTION

The object of the invention is a concrete segment of a section of a tower of a wind turbine and an adapter of a tower of a wind turbine.

The invention also relates to a wind turbine comprising a tower which in turn comprises the concrete segment of the section and/or the adapter.

### BACKGROUND OF THE INVENTION

The wind turbines comprise a tower, a nacelle which houses the electrical generator and a rotor formed in turn by at least two blades. The tower of the wind turbine supports the nacelle and the rotor. Large wind turbines have steel, lattice, or reinforced concrete towers or even mixed-type towers, the latter comprising sections of different materials, for example, a lower section of concrete and an upper section of steel or lattice.

Due to the height of the wind turbines, the tower has to be divided into several annular sections which are stacked during the wind turbine assembly stage thus forming the full height of the tower. Dividing the tower into sections has the advantage that each section has a size such that its transport by road or rail is easier.

One of the most commonly used materials for large towers is concrete, since it involves competitive costs and performance compared to those to produce steel towers of similar characteristics. However, the weight of each concrete tower section can easily exceed one hundred tons, this fact being infrequent for metal tower sections, so stacking the concrete sections requires heavy-tonnage lifting and positioning means. The cost of using such lifting and positioning means, which may be for example a crane, is directly related to the tonnage and height that it is capable of handling and the time of use thereof. This high-tonnage crane is also used for lifting and positioning the nacelle, as the weight of the nacelle may also exceed 100 tons.

It is known in the state of the art, the towers for wind turbines being of the kind of "concrete-steel hybrid" towers comprising a first tower section comprising at least two concrete segments and further comprising a second tower section made of steel, the tower further comprising an adapter for connecting the two tower sections, and the towers for wind turbines being of the kind of "full-concrete" towers comprising an adapter disposed in the upper part of the upper concrete tower section and below a wind turbine component, the wind turbine component being preferably the yaw bearing of the nacelle.

In a first embodiment, the adapter comprises an annular concrete element and a steel element that has at least one annular flange, wherein the flange covers an upper surface of the concrete element of the adapter in installation position. Consequently, this adapter consists of concrete and steel, in which case the steel element is cast directly with the concrete element of the adapter. Here, the annular flange of the steel element is fully grouted in the concrete without air inclusions. In a related method for building the tower, the steel element with an annular flange is initially provided for building the adapter, which is installed headlong in a ring-shaped formwork. Afterwards, concrete is placed in the formwork and as a result of that, the annular concrete element of the adapter can be made. Here, the concrete is placed directly on the underside of the flange so that, in the finished adapter, the flange is fully grouted establishing a connection between the concrete element and the steel element of the adapter.

In a second embodiment, the adapter is made entirely of steel, and a grout layer must be disposed between the adapter and the first tower section made of concrete to establish a connection between the steel adapter and the concrete section.

However, in both embodiments, the adapter is joined to the immediately below concrete part or section by means of bolts passing through a first set of holes. The adapter also comprises a second set of holes for allowing the passage of tensioning elements of the tower. The first set of holes and the second set of holes are disposed in concentrical circumferences with different radius, thus needing more material and complex system for attaching auxiliary devices of the tower or thus resulting in technical solutions wherein the disposition of the tensioning elements far from the inner tower wall not carrying out an optimum post-tensioning of the concrete wall.

CN104121155A discloses a prestressed concrete and steel combined tower on which a self-support wind generator set can be assembled and an anchoring method of the prestressed concrete and steel combined tower. The prestressed concrete and steel combined tower comprises a fan foundation and a steel tower cylinder section above the fan foundation and further comprises a prefabricated concrete tower cylinder section and a prefabricated concrete conversion section, and the fan foundation, the prefabricated concrete tower cylinder section, the prefabricated concrete conversion section and the steel tower cylinder section are sequentially connected through prestress anchor sheaves in the sequence from bottom to top.

The present invention solves the problems described above.

### DESCRIPTION OF THE INVENTION

The invention relates to a concrete segment of a section of a tower of a wind turbine, wherein the tower comprises at least the concrete section, an adapter, a plurality of tensioning elements configured to tension the tower and a plurality of bolts configured to join the adapter to the concrete section;
wherein the concrete section comprises:
   - at least two concrete segments;
   - at least two vertical joints configured to join the at least two concrete segments;
wherein the concrete segment comprises:
   - an upper flange which in turn comprises:
      - a first set of holes intended to accommodate, in use, the plurality of tensioning elements; and
      - a second set of holes intended to accommodate, in use, the plurality of bolts;
wherein the first set of holes and the second set of holes are arranged in an uneven distribution in a single circumferential row in the upper flange.

The concrete segment so configured comprises a region, i.e., a proximal region to each vertical joint wherein at least a bolt is disposed between each one of the at least two vertical joints and at least one hole of the first set of holes, thus reducing the stresses in the proximity of the vertical joint.

Since the concrete section is configured to be disposed below the adapter and to be joined to it, the tensioning elements with the concrete section so configured can be disposed as close as possible to a central portion of an adapter that is described below, so limiting the stresses since the loads coming above the adapter are transmitted by the central portion.

Since the concrete segment comprises a greater thickness in the proximity of the vertical joint, the disposition of a tensioning element configured to be disposed by the interior of the tower would not be possible.

In this way, the configuration of the concrete segment described above minimizes the necessary concrete to cast the concrete segment.

Optionally at least a part of the first set of holes and at least a part of the second set of holes are disposed, in use, in a substantially symmetrical way with respect to the at least two vertical joints. Preferably, at least two holes of the second set of holes are disposed, in use, between each one of the at least two vertical joints and the at least one hole of the first set of holes.

Optionally, a sequence of the second set of holes and the first set of holes is n, 1, n, 1, n, 1, m, 1, n, 1, n, corresponding the odd positions in the sequence to the holes of the second set of holes and the even positions in the sequence to the holes of the first set of holes, wherein n>1 and m>1.

Optionally, the concrete segment comprises a greater number of holes of the second set of holes than a number of holes of the first set of holes.

Optionally, the uneven distribution of holes comprises a first group of holes of the second set of holes and at least a second group of holes of the second set of holes and at least a first group of holes of the first set of holes, wherein first group of holes of the second set of holes is substantially greater in number than the at least a second group of holes of the second set of holes and the at least first group of holes of the first set of holes.

Optionally, a sequence of the second set of holes and the first set of holes is n, 1, n, 1, n, 1, m, 1, n, 1, n, corresponding the odd positions in the sequence to the holes of the second set of holes and the even positions in the sequence to the holes of the first set of holes, wherein n>=1 and m>=2 and m>n. Preferably m>2n.

Optionally, a ratio between the second set of holes and the first set of holes is between 3 and 5.

Optionally, the first set of holes and the second set of holes are disposed in a single circumferential row.

So, disposing the first set of holes and the second set of holes in a single circumferential row, it is possible to dispose the tensioning elements as close as possible to the inner wall of the concrete section disposed below and therefore of the tower, so increasing the available space in the interior of the tower.

Also, alternating the first set of holes and the second set of holes in a single circumferential row, the space intended to be occupied by tensioning elements are now occupied by bolts, thereby reducing the stress on the concrete of the concrete section disposed below the adapter.

A non-claimed example discloses an adapter of a tower of a wind turbine, wherein the tower comprises the adapter, a concrete section, a plurality of tensioning elements configured to tension the tower and a plurality of bolts configured to join the adapter to the concrete section;
wherein the concrete section comprises:
   - at least two concrete segments;
   - at least two vertical joints configured to join the at least two concrete segments; and
wherein the adapter comprises:
   - a lower flange which in turn comprises:
      - a first set of holes intended to accommodate, in use, the plurality of tensioning elements; and
      - a second set of holes intended to accommodate, in use, the plurality of bolts;
wherein the first set of holes and the second set of holes are arranged in an uneven distribution in the lower flange.

Optionally, at least a part of the first set of holes and at least a part of the second set of holes are disposed, in use, in a substantially symmetrical way with respect to the at least two vertical joints. Preferably, at least two holes of the second set of holes are disposed, in use, between each one of the at least two vertical joints and the at least one hole of the first set of holes.

Optionally, a sequence of the second set of holes and the first set of holes is n, 1, n, 1, n, 1, m, 1, n, 1, n, corresponding the odd positions in the sequence to the holes of the second set of holes and the even positions in the sequence to the holes of the first set of holes, wherein n>1 and m>1.

Optionally, a greater number of holes of the second set of holes than a number of holes of the first set of holes.

Optionally, the uneven distribution of holes comprises a first group of holes of the second set of holes and at least a second group of holes of the second set of holes and at least a first group of holes of the first set of holes, wherein first group of holes of the second set of holes is substantially greater in number than the at least a second group of holes of the second set of holes and the at least first group of holes of the first set of holes.

Optionally, a sequence of the second set of holes and the first set of holes is n, 1, n, 1, n, 1, m, 1, n, 1, n, corresponding the odd positions in the sequence to the holes of the second set of holes and the even positions in the sequence to the holes of the first set of holes, wherein n>=1 and m>=2 and m>n, preferably m>2n.

Optionally, a ratio between the second set of holes and the first set of holes is between 3 and 5.

The invention also relates to a wind turbine comprising a tower of a wind turbine comprising the adapter described above and/or a concrete section comprising at least two concrete segments as described above and at least two vertical joints configured to join the at least two concrete segments, tensioning elements configured to tension the tower and bolts configured to join the adapter to the concrete section.

### DESCRIPTION OF THE FIGURES

To complement the description being made and for the sake of a better understanding of the characteristics of the invention according to a preferred practical embodiment thereof, attached as an integral part of said description are a set of drawings wherein, for the purpose of illustration and not limiting the scope of the invention, the following is shown:

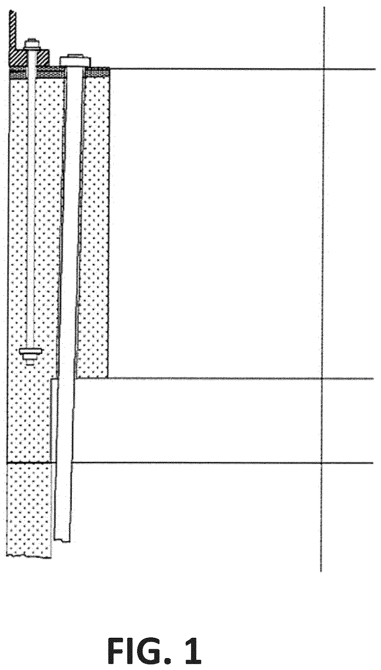

Figure 1 shows a concrete part and a steel part of an adapter of a wind turbine tower according to the state of the art, showing bolts passing through a first set of holes and a second set of holes for allowing the passage of tensioning elements of the tower, wherein the first set of holes and the second set of holes are disposed in concentrical circumferences with different radius.

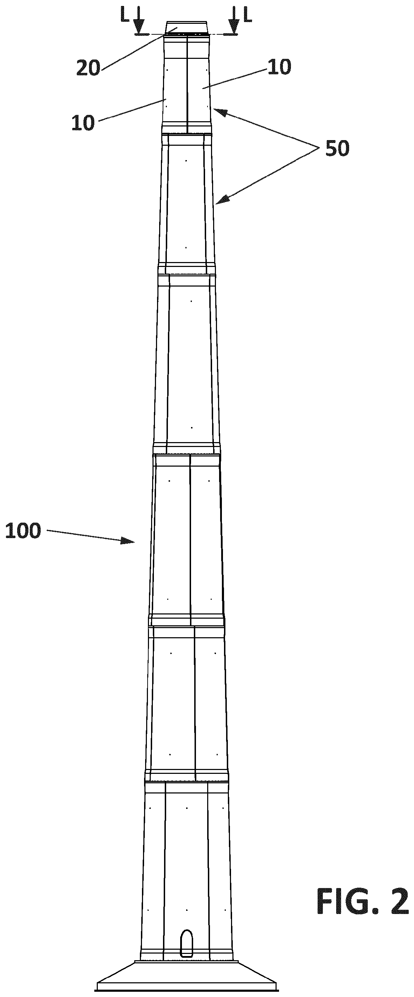

Figure 2 shows an elevation view of a tower of a wind turbine comprising an adapter according to the invention and a concrete section according to the invention.
Figure 3 shows a detail of section view LL of the tower of Figure 2 according to a first embodiment, wherein the adapter has been partially deleted to shown the upper flange of the concrete section of the tower.

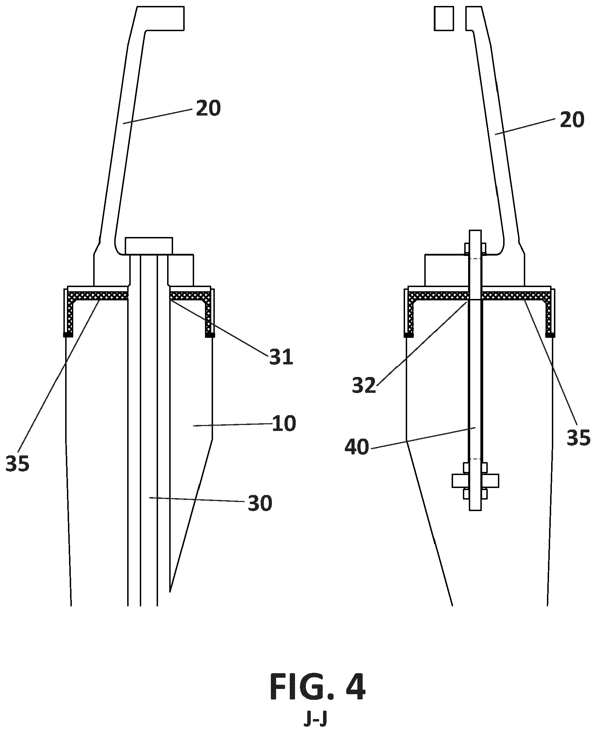

Figure 4 shows a section view JJ of Figure 3.

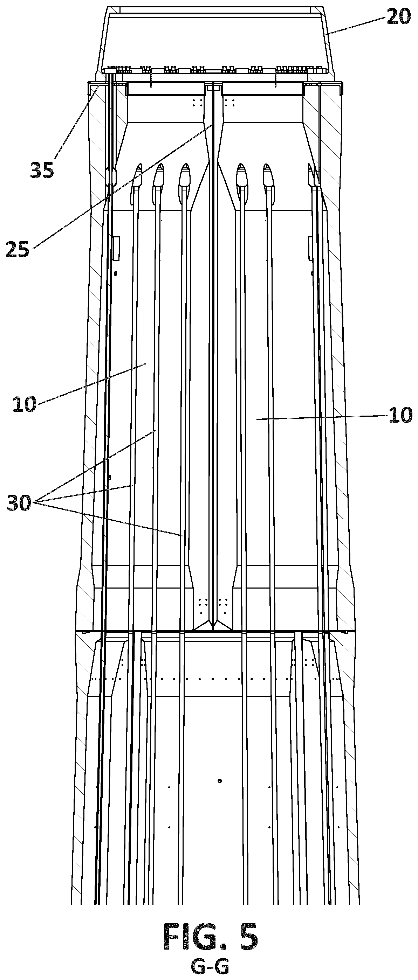

Figure 5 shows a section view GG of Figure 3.

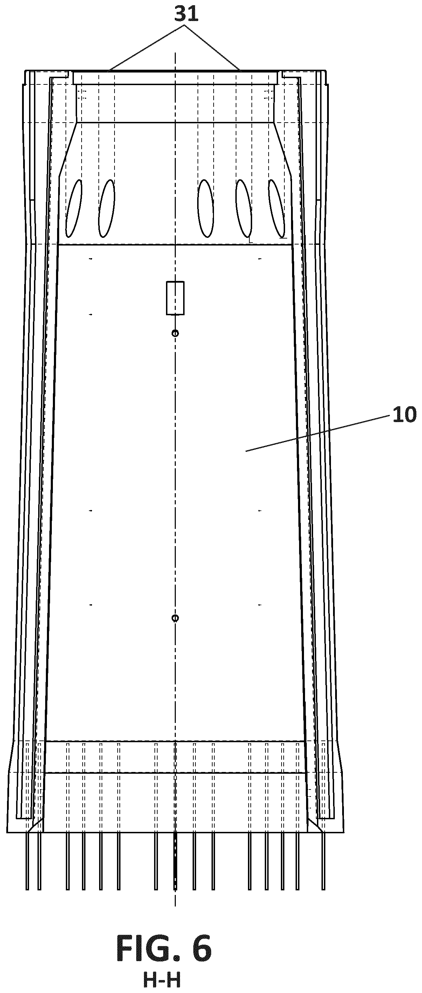

Figure 6 shows a section view HH of Figure 3.

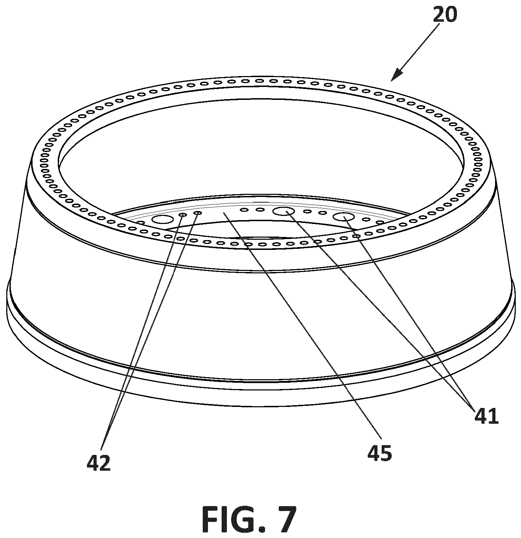

Figure 7 shows a perspective view of the adapter according to the invention.
Figure 8 shows a detail of section view LL of the tower of Figure 2 according to a second embodiment.

### PREFERRED EMBODIMENT OF THE INVENTION

The following is a detailed description of the concrete segment (10) of a section (50) of a tower (100) of a wind turbine, wherein the tower (100) comprises at least the concrete section (50), an adapter (20), a plurality of tensioning elements (30) configured to tension the tower and a plurality of bolts (40) configured to join the adapter (20) to the concrete section (50);
wherein the concrete section (50) comprises:
   - at least two concrete segments (10);
   - at least two vertical joints (25) configured to join the at least two concrete segments (10);
wherein the concrete segment (10) comprises:
   - an upper flange (35) which in turn comprises:
      - a first set of holes (31) intended to accommodate, in use, the plurality of tensioning elements (30); and
      - a second set of holes (32) intended to accommodate, in use, the plurality of bolts (40);
wherein the first set of holes (31) and the second set of holes (32) are arranged in an uneven distribution in the upper flange (35).

In this embodiment, at least a part of the first set of holes (31) and at least a part of the second set of holes (32) are disposed, in use, in a substantially symmetrical way with respect to the at least two vertical joints (25).

Also, two holes (32) of the second set of holes are disposed, in use, between each one of the at least two vertical joints (25) and one hole (31) of the first set of holes.

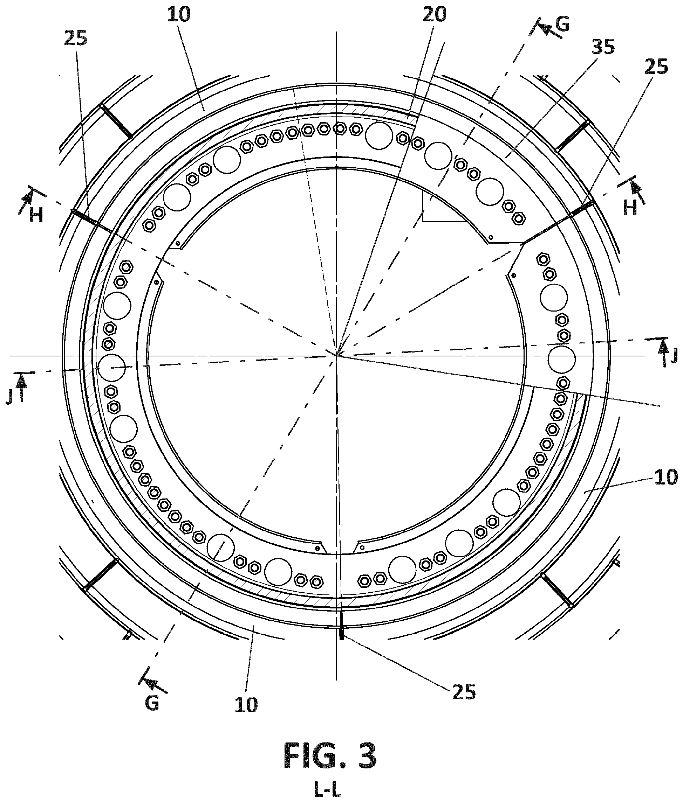

A sequence of the second set of holes (32) and the first set of holes (31) is n, 1, n, 1, n, 1, m, 1, n, 1, n, corresponding the odd positions in the sequence to the holes (32) of the second set of holes (32) and the even positions in the sequence to the holes (31) of the first set of holes (31), wherein n=2 and m=8, as shown in Figure 3. So, the second set of holes (32) comprises a greater number of holes (32) than a number of holes (31) of the first set of holes.

In this embodiment, a ratio between the second set of holes (32) and the first set of holes (31) is 3,6.

The adapter (20) of a tower (100) of a wind turbine according to a preferred embodiment is now described, wherein the tower comprises the adapter (20), a concrete section (50), a plurality of tensioning elements (30) configured to tension the tower (100) and a plurality of bolts (40) configured to join the adapter (20) to the concrete section (50);
wherein the concrete section (50) comprises:
   - at least two concrete segments (10);
   - at least two vertical joints (25) configured to join the at least two concrete segments (10); and
wherein the adapter (20) comprises:
   - a lower flange (45) which in turn comprises:
      - a first set of holes (41) intended to accommodate, in use, the plurality of tensioning elements (30); and
      - a second set of holes (42) intended to accommodate, in use, the plurality of bolts (40);
wherein the first set of holes (41) and the second set of holes (42) are arranged in an uneven distribution in the lower flange (45).

In this embodiment, at least a part of the first set of holes (41) and at least a part of the second set of holes (42) are disposed, in use, in a substantially symmetrical way with respect to the at least two vertical joints (25).

Also, two holes (42) of the second set of holes are disposed, in use, between each one of the at least two vertical joints (25) and the at least one hole (41) of the first set of holes.

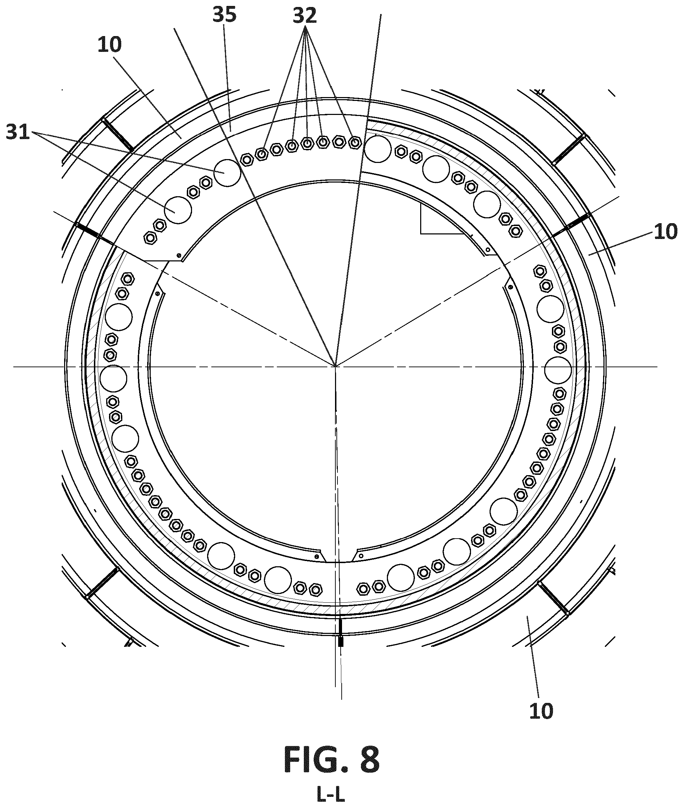

A sequence of the second set of holes (42) and the first set of holes (31) is n, 1, n, 1, n, 1, m, 1, n, 1, n, corresponding the odd positions in the sequence to the holes (42) of the second set of holes (42) and the even positions in the sequence to the holes (41) of the first set of holes (41), wherein n=2 and m=8, as shown in Figure 8. So, the second set of holes (42) comprises a greater number of holes (42) than a number of holes (41) of the first set of holes.

In this embodiment, a ratio between the second set of holes (42) and the first set of holes (41) is 3,6.

The wind turbine comprising a tower (100), also comprises an adapter (20) as described above for this embodiment, a concrete section (50) comprising three concrete segments (10) as described above for this embodiment and three vertical joints (25) configured to join the three concrete segments (10), tensioning elements (30) configured to tension the tower (100) and bolts (40) configured to join the adapter (20) to the concrete section (50).

## Claims

1. Wind turbine concrete segment (10) configured to form, in use, at least part of a section (50) of a tower (100) of a wind turbine, wherein the tower (100) comprises at least the concrete section (50), an adapter (20), a plurality of tensioning elements (30) configured, in use, to tension the tower and a plurality of bolts (40) configured to join the adapter (20) to the concrete section (50);
wherein the concrete section (50) comprises:
- at least two wind turbine concrete segments (10);
- at least two vertical joints (25) configured to join the at least two wind turbine concrete segments (10);
wherein the wind turbine concrete segment (10) comprises:
- an upper flange (35) which in turn comprises:
- a first set of holes (31) intended to accommodate, in use, the plurality of tensioning elements (30); and
- a second set of holes (32) intended to accommodate, in use, the plurality of bolts (40);
**characterized in that** the first set of holes (31) and the second set of holes (32) are arranged
in an uneven distribution in a single circumferential row in the upper flange (35).

2. The wind turbine concrete segment (10) of claim 1, wherein at least a part of the first set of holes (31) and at least a part of the second set of holes (32) are disposed, in use, in a substantially symmetrical way with respect to the at least two vertical joints (25).

3. The wind turbine concrete segment (10) of claim 2, wherein at least two holes (32) of the second set of holes are disposed, in use, between each one of the at least two vertical joints (25) and the at least one hole (31) of the first set of holes.

4. The wind turbine concrete segment (10) of any of previous claims, wherein a sequence of the second set of holes (32) and the first set of holes (31) is n, 1, n, 1, n, 1, m, 1, n, 1, n, corresponding the odd positions in the sequence to the holes (32) of the second set of holes (32) and the even positions in the sequence to the holes (31) of the first set of holes (31), wherein n>1 and m>1.

5. The wind turbine concrete segment (10) of any of previous claims, comprising a greater number of holes (32) of the second set of holes than a number of holes (31) of the first set of holes.

6. The wind turbine concrete segment (10) of claim 5, wherein the uneven distribution of holes comprises a first holes (32) of the second set of holes and at least a second holes (32) of the second set of holes and at least a first holes (31) of the first set of holes, wherein the first holes (32) of the second set of holes are substantially greater in number than the at least second holes (32) of the second set of holes and the at least first holes (31) of the first set of holes.

7. The wind turbine concrete segment (10) of claim 6, wherein a sequence of the second set of holes (32) and the first set of holes (31) is n, 1, n, 1, n, 1, m, 1, n, 1, n, corresponding the odd positions in the sequence to the holes (32) of the second set of holes (32) and the even positions in the sequence to the holes (31) of the first set of holes (31), wherein n>=1 and m>=2 and m>n.

8. Wind turbine comprising a tower (100) which in turn comprises a concrete section (50) comprising at least two wind turbine concrete segments (10) of any of claims 1 to 7 and at least two vertical joints (25), an adapter (20), a plurality of tensioning elements (30) configured to tension the tower and a plurality of bolts (40) configured to join the adapter (20) to the concrete section (50).

9. The wind turbine of claim 8,
wherein the adapter (20) comprises:
- a lower flange (45) which in turn comprises:
- a first set of holes (41) intended to accommodate, in use, the plurality of tensioning elements (30); and
- a second set of holes (42) intended to accommodate, in use, the plurality of bolts (40);
wherein the first set of holes (41) and the second set of holes (42) are arranged in an uneven distribution in a single circumferential row in the lower flange (45).

10. The wind turbine of claim 9, wherein at least a part of the first set of holes (41) and at least a part of the second set of holes (42) of the adapter (20) are disposed in a substantially symmetrical way with respect to the at least two vertical joints (25).

11. The wind turbine of claim 10, wherein at least two holes (42) of the second set of holes of the adapter (20) are disposed between each one of the at least two vertical joints (25) and the at least one hole (41) of the first set of holes.

12. The wind turbine of any of claims 9 to 11, wherein a sequence of the second set of holes (42) and the first set of holes (31) is n, 1, n, 1, n, 1, m, 1, n, 1, n, corresponding the odd positions in the sequence to the holes (42) of the second set of holes (42) and the even positions in the sequence to the holes (41) of the first set of holes (41), wherein n>1 and m>1.

13. The wind turbine of any of claims 9 to 12, wherein the adapter comprises a greater number of holes (42) of the second set of holes than a number of holes (41) of the first set of holes.

14. The wind turbine of claim 13, wherein the uneven distribution of holes of the adapter (20) comprises a first holes (42) of the second set of holes and at least a second holes (42) of the second set of holes and at least a first holes (41) of the first set of holes, wherein the first holes (42) of the second set of holes is substantially greater in number than the at least second holes (42) of the second set of holes and the at least first holes (41) of the first set of holes.

15. The wind turbine of any claims 12 to 14, wherein a sequence of the second set of holes (42) and the first set of holes (41) of the adapter (20) is n, 1, n, 1, n, 1, m, 1, n, 1, n, corresponding the odd positions in the sequence to the holes (42) of the second set of holes (42) and the even positions in the sequence to the holes (41) of the first set of holes (41), wherein n>=1 and m>=2 and m>n.

## Patentansprüche

1. Windenergieanlagen-Betonsegment (10), das konfiguriert ist, um im Gebrauch zumindest einen Teil eines Abschnitts (50) eines Turms (100) einer Windenergieanlage zu bilden, wobei der Turm (100) zumindest den Betonabschnitt (50), einen Adapter (20), eine Vielzahl von Spannelementen (30), die konfiguriert sind, um im Gebrauch den Turm zu verspannen, und eine Vielzahl von Schrauben (40), die konfiguriert sind, um den Adapter (20) mit dem Betonabschnitt (50) zu verbinden;
wobei der Betonabschnitt (50) Folgendes umfasst:
- mindestens zwei Windenergieanlagen-Betonsegmente (10);
- mindestens zwei vertikale Verbindungsstellen (25), die konfiguriert sind, um die mindestens zwei Windenergieanlagen-Betonsegmente (10) zu verbinden;
wobei das Windenergieanlagen-Betonsegment (10) Folgendes umfasst:
- einen oberen Flansch (35), der seinerseits Folgendes umfasst:
- eine erste Gruppe von Löchern (31), die dazu bestimmt sind, im Gebrauch die Vielzahl von Spannelementen (30) aufzunehmen; und
- eine zweite Gruppe von Löchern (32), die dazu bestimmt ist, im Gebrauch die Vielzahl von Schrauben (40) aufzunehmen;
**dadurch gekennzeichnet, dass**
die erste Gruppe von Löchern (31) und die zweite Gruppe von Löchern (32) einer in unregelmäßiger Verteilung in einer einzigen Umfangsreihe in dem oberen Flansch (35) angeordnet sind.

2. Windenergieanlagen-Betonsegment (10) nach Anspruch 1, wobei zumindest ein Teil der ersten Gruppe von Löchern (31) und zumindest ein Teil der zweiten Gruppe von Löchern (32) im Gebrauch auf eine im Wesentlichen symmetrische Weise in Bezug auf die mindestens zwei vertikalen Verbindungsstellen (25) angeordnet sind.

3. Windenergieanlagen-Betonsegment (10) nach Anspruch 2, wobei mindestens zwei Löcher (32) der zweiten Gruppe von Löchern im Gebrauch zwischen jeder der mindestens zwei vertikalen Verbindungsstellen (25) und dem mindestens einen Loch (31) der ersten Gruppe von Löchern angeordnet sind.

4. Windenergieanlagen-Betonsegment (10) nach einem der vorherigen Ansprüche, wobei eine Abfolge der zweiten Gruppe von Löchern (32) und der ersten Gruppe von Löchern (31) n, 1, n, 1, n, 1, m, 1, n, 1, n ist, wobei die ungeraden Positionen in der Abfolge den Löchern (32) der zweiten Gruppe von Löchern (32) und die geraden Positionen in der Abfolge den Löchern (31) der ersten Gruppe von Löchern (31) entsprechen, wobei n > 1 und m > 1.

5. Windenergieanlagen-Betonsegment (10) nach einem der vorherigen Ansprüche, umfassend eine größere Anzahl von Löchern (32) der zweiten Gruppe von Löchern als eine Anzahl von Löchern (31) der ersten Gruppe von Löchern.

6. Windenergieanlagen-Betonsegment (10) nach Anspruch 5, wobei die ungleichmäßige Verteilung der Löcher ein erstes Loch (32) der zweiten Gruppe von Löchern und mindestens ein zweites Loch (32) der zweiten Gruppe von Löchern sowie mindestens ein erstes Loch (31) der ersten Gruppe von Löchern umfasst, wobei die Anzahl der ersten Löcher (32) der zweiten Gruppe von Löchern zahlenmäßig wesentlich größer ist als die mindestens zweiten Löcher (32) der zweiten Gruppe von Löchern und die mindestens ersten Löcher (31) der ersten Gruppe von Löchern.

7. Windenergieanlagen-Betonsegment (10) nach Anspruch 6, wobei eine Abfolge der zweiten Gruppe von Löchern (32) und der ersten Gruppe von Löchern (31) n, 1, n, 1, n, 1, m, 1, n, 1, n ist, wobei die ungeraden Positionen in der Abfolge den Löchern (32) der zweiten Gruppe von Löchern (32) und die geraden Positionen in der Abfolge den Löchern (31) der ersten Gruppe von Löchern (31) entsprechen, wobei n ≥ 1 und m ≥ 2 und m > n.

8. Windenergieanlage, umfassend einen Turm (100), der seinerseits einen Betonabschnitt (50) umfasst, umfassend mindestens zwei Windenergieanlagen-Betonsegmente (10) nach einem der Ansprüche 1 bis 7 und mindestens zwei vertikale Verbindungsstellen (25), einen Adapter (20), eine Vielzahl von Spannelementen (30), die konfiguriert sind, um den Turm zu verspannen, und eine Vielzahl von Schrauben (40), die konfiguriert sind, um den Adapter (20) mit dem Betonabschnitt (50) zu verbinden.

9. Windenergieanlage nach Anspruch 8,
wobei der Adapter (20) Folgendes umfasst:
- einen unteren Flansch (45), der seinerseits Folgendes umfasst:
- eine erste Gruppe von Löchern (41), die dazu bestimmt sind, im Gebrauch die Vielzahl von Spannelementen (30) aufzunehmen; und
- eine zweite Gruppe von Löchern (42), die dazu bestimmt ist, im Gebrauch die Vielzahl von Schrauben (40) aufzunehmen;
wobei die erste Gruppe von Löchern (41) und die zweite Gruppe von Löchern (42) einer in unregelmäßiger Verteilung in einer einzigen Umfangsreihe in dem unteren Flansch (45) angeordnet sind.

10. Windenergieanlage nach Anspruch 9, wobei zumindest ein Teil der ersten Gruppe von Löchern (41) und zumindest ein Teil der zweiten Gruppe von Löchern (42) des Adapters (20) auf eine im Wesentlichen symmetrische Weise in Bezug auf die mindestens zwei vertikalen Verbindungsstellen (25) angeordnet sind.

11. Windenergieanlage nach Anspruch 10, wobei mindestens zwei Löcher (42) der zweiten Gruppe von Löchern des Adapters (20) zwischen jeder der mindestens zwei vertikalen Verbindungsstellen (25) und dem mindestens einen Loch (41) der ersten Gruppe von Löchern angeordnet sind.

12. Windenergieanlage nach einem der Ansprüche 9 bis 11, wobei die Abfolge der zweiten Gruppe von Löchern (42) und der ersten Gruppe von Löchern (31) n, 1, n, 1, n, 1, m, 1, n, 1, n ist, wobei die ungeraden Positionen in der Abfolge den Löchern (42) der zweiten Gruppe von Löchern (42) und die geraden Positionen in der Abfolge den Löchern (41) der ersten Gruppe von Löchern (41) entsprechen, wobei n > 1 und m > 1.

13. Windenergieanlage nach einem der Ansprüche 9 bis 12, wobei der Adapter eine größere Anzahl von Löchern (42) der zweiten Gruppe von Löchern umfasst als die Anzahl von Löchern (41) der ersten Gruppe von Löchern.

14. Windenergieanlage nach Anspruch 13, wobei die ungleichmäßige Verteilung der Löcher des Adapters (20) ein erstes Loch (42) der zweiten Gruppe von Löchern und mindestens ein zweites Loch (42) der zweiten Gruppe von Löchern sowie mindestens ein erstes Loch (41) der ersten Gruppe von Löchern umfasst, wobei die Anzahl der ersten Löcher (42) der zweiten Gruppe von Löchern zahlenmäßig wesentlich größer ist als die mindestens zweiten Löcher (42) der zweiten Gruppe von Löchern und die mindestens ersten Löcher (41) der ersten Gruppe von Löchern.

15. Windenergieanlage nach einem der Ansprüche 12 bis 14, wobei die Abfolge der zweiten Gruppe von Löchern (42) und der ersten Gruppe von Löchern (41) des Adapters (20) n, 1, n, 1, n, 1, m, 1, n, 1, n ist, wobei die ungeraden Positionen in der Abfolge den Löchern (42) der zweiten Gruppe von Löchern (42) und die geraden Positionen in der Abfolge den Löchern (41) der ersten Gruppe von Löchern (41) entsprechen, wobei n ≥ 1 und m ≥ 2 und m > n.

## Revendications

1. Segment en béton (10) d'éolienne conçu pour former, en utilisation, au moins une partie d'une section (50) d'une tour (100) d'une éolienne, dans lequel la tour (100) comprend au moins la section en béton (50), un adaptateur (20), une pluralité d'éléments de mise en tension (30) conçus, en utilisation, pour mettre en tension la tour et une pluralité de boulons (40) conçus pour joindre l'adaptateur (20) à la section en béton (50) ;
dans lequel la section en béton (50) comprend :
- au moins deux segments en béton (10) d'éolienne ;
- au moins deux joints verticaux (25) conçus pour joindre les au moins deux segments en béton (10) d'éolienne ;
dans lequel le segment en béton (10) d'éolienne comprend :
- une bride supérieure (35) qui à son tour comprend :
- un premier ensemble de trous (31) destinés à accueillir, en utilisation, la pluralité d'éléments de mise en tension (30) ; et
- un second ensemble de trous (32) destinés à accueillir, en utilisation, la pluralité de boulons (40) ;
**caractérisé en ce que**
le premier ensemble de trous (31) et le second ensemble de trous (32) sont agencés dans une répartition inégale dans une rangée circonférentielle unique dans la bride supérieure (35).

2. Segment en béton (10) d'éolienne selon la revendication 1, dans lequel au moins une partie du premier ensemble de trous (31) et au moins une partie du second ensemble de trous (32) sont disposées, en utilisation, d'une manière sensiblement symétrique par rapport aux au moins deux joints verticaux (25).

3. Segment en béton (10) d'éolienne selon la revendication 2, dans lequel au moins deux trous (32) du second ensemble de trous sont disposés, en utilisation, entre chacun des au moins deux joints verticaux (25) et l'au moins un trou (31) du premier ensemble de trous.

4. Segment en béton (10) d'éolienne selon l'une quelconque des revendications précédentes, dans lequel une séquence du second ensemble de trous (32) et du premier ensemble de trous (31) est n, 1, n, 1, n, 1, m, 1, n, 1, n, faisant correspondre les positions impaires dans la séquence aux trous (32) du second ensemble de trous (32) et les positions paires dans la séquence aux trous (31) du premier ensemble de trous (31), dans lequel n > 1 et m > 1.

5. Segment en béton (10) d'éolienne selon l'une quelconque des revendications précédentes, comprenant un nombre de trous (32) du second ensemble de trous supérieur à un nombre de trous (31) du premier ensemble de trous.

6. Segment en béton (10) d'éolienne selon la revendication 5, dans lequel la répartition inégale de trous comprend un premier trou (32) du second ensemble de trous et au moins un second trou (32) du second ensemble de trous, et au moins un premier trou (31) du premier ensemble de trous, dans lequel les premiers trous (32) du second ensemble de trous sont sensiblement en nombre supérieur par rapport aux au moins seconds trous (32) du second ensemble de trous et aux au moins premiers trous (31) du premier ensemble de trous.

7. Segment en béton (10) d'éolienne selon la revendication 6, dans lequel une séquence du second ensemble de trous (32) et du premier ensemble de trous (31) est n, 1, n, 1, n, 1, m, 1, n, 1, n, faisant correspondre les positions impaires dans la séquence aux trous (32) du second ensemble de trous (32) et les positions paires dans la séquence aux trous (31) du premier ensemble de trous (31), dans lequel n >= 1 et m >= 2 et m > n.

8. Éolienne comprenant une tour (100) qui à son tour comprend une section en béton (50) comprenant au moins deux segments en béton (10) d'éolienne selon l'une quelconque des revendications 1 à 7 et au moins deux joints verticaux (25), un adaptateur (20), une pluralité d'éléments de mise en tension (30) conçus pour mettre en tension la tour et une pluralité de boulons (40) conçus pour joindre l'adaptateur (20) à la section en béton (50).

9. Éolienne selon la revendication 8,
dans laquelle l'adaptateur (20) comprend :
- une bride inférieure (45) qui à son tour comprend :
- un premier ensemble de trous (41) destinés à accueillir, en utilisation, la pluralité d'éléments de mise en tension (30) ; et
- un second ensemble de trous (42) destinés à accueillir, en utilisation, la pluralité de boulons (40) ;
dans laquelle le premier ensemble de trous (41) et le second ensemble de trous (42) sont agencés dans une répartition inégale dans une rangée circonférentielle unique dans la bride inférieure (45).

10. Éolienne selon la revendication 9, dans laquelle au moins une partie du premier ensemble de trous (41) et au moins une partie du second ensemble de trous (42) de l'adaptateur (20) sont disposées d'une manière sensiblement symétrique par rapport aux au moins deux joints verticaux (25).

11. Éolienne selon la revendication 10, dans laquelle au moins deux trous (42) du second ensemble de trous de l'adaptateur (20) sont disposés entre chacun des au moins deux joints verticaux (25) et l'au moins un trou (41) du premier ensemble de trous.

12. Éolienne selon l'une quelconque des revendications 9 à 11, dans laquelle une séquence du second ensemble de trous (42) et du premier ensemble de trous (31) est n, 1, n, 1, n, 1, m, 1, n, 1, n, faisant correspondre les positions impaires dans la séquence aux trous (42) du second ensemble de trous (42) et les positions paires dans la séquence aux trous (41) du premier ensemble de trous (41), dans lequel n > 1 et m > 1.

13. Éolienne selon l'une quelconque des revendications 9 à 12, dans laquelle l'adaptateur comprend un nombre de trous (42) du second ensemble de trous supérieur à un nombre de trous (41) du premier ensemble de trous.

14. Éolienne selon la revendication 13, dans laquelle la répartition inégale des trous de l'adaptateur (20) comprend un premier trou (42) du second ensemble de trous et au moins un second trou (42) du second ensemble de trous et au moins un premier trou (41) du premier ensemble de trous, dans laquelle les premiers trous (42) du second ensemble de trous sont sensiblement en nombre supérieur par rapport aux au moins seconds trous (42) du second ensemble de trous et aux au moins premiers trous (41) du premier ensemble de trous.

15. Éolienne selon l'une quelconque des revendications 12 à 14, dans laquelle une séquence du second ensemble de trous (42) et du premier ensemble de trous (41) de l'adaptateur (20) est n, 1, n, 1, n, 1, m, 1, n, 1, n, faisant correspondre les positions impaires dans la séquence aux trous (42) du second ensemble de trous (42) et les positions paires dans la séquence aux trous (41) du premier ensemble de trous (41), dans laquelle n >= 1 et m >= 2 et m > n.
